# EUROPÄISCHE PATENTSCHRIFT

(11) **EP 3 714 169 B1**
(45) Veröffentlichungstag und Bekanntmachung des Hinweises auf die Patenterteilung: **22.12.2021**
(21) Anmeldenummer: 18785914.5
(22) Anmeldetag: 09.10.2018
(51) Int. Cl.: F04F 5/16, F04F 5/46

(54) **STRAHLPUMPENEINHEIT MIT EINEM DOSIERVENTIL ZUM STEUERN EINES GASFÖRMIGEN MEDIUMS**
JET PUMP UNIT COMPRISING A METERING VALVE, FOR CONTROLLING A GASEOUS MEDIUM
UNITÉ POMPE À JET DOTÉE D'UNE SOUPAPE DE DOSAGE POUR LA COMMANDE D'UN MILIEU GAZEUX

(30) Priorität: 21.11.2017 DE 102017220800
(43) Veröffentlichungstag der Anmeldung: 30.09.2020
(73) Patentinhaber: Robert Bosch GmbH, 70442 Stuttgart (DE)
(72) Erfinder: MAGEL, Hans-Christoph, 72764 Reutlingen (DE)
(86) Internationale Anmeldenummer: PCT/EP2018/077407
(87) Internationale Veröffentlichungsnummer: WO 2019/101415

(56) Entgegenhaltungen:
- DE-A1- 10 259 808
- DE-A1-102010 043 618
- US-A1- 2017 244 119

## Beschreibung

Die Erfindung betrifft eine Strahlpumpeneinheit mit einem Dosierventil zum Steuern eines gasförmigen Mediums, insbesondere Wasserstoff, beispielsweise zur Anwendung in Fahrzeugen mit Brennstoffzellenantrieb.

### Stand der Technik

Die DE 10 2010 043 618 A1 beschreibt eine Strahlpumpeneinheit mit einem Dosierventil zum Steuern eines gasförmigen Mediums, insbesondere Wasserstoff, wobei das Dosierventil ein Ventilgehäuse, eine Ejektoreinheit, einen Aktor und ein Schließelement umfasst. In dem Ventilgehäuse ist eine Durchgangsöffnung ausgebildet, welche durch das Schließelement an einem Ventilsitz freigegeben oder verschlossen werden kann. Die Ejektoreinheit umfasst einen Zuströmbereich, welchem ein erstes gasförmiges Medium unter Druck zugeführt wird, einem Ansaugbereich, an welchem ein zweites Medium ansteht, und einen Mischrohrbereich, aus welchem ein Gemisch des ersten und des zweiten gasförmigen Mediums austritt. Die Durchgangsöffnung ist zwischen dem Zuströmbereich und dem Ansaugbereich der Ejektoreinheit angeordnet. < Seite 1a einfügen >

Optimierungen von Spülvorgängen in einem Anodenpfad einer Brennstoffzellenanordnung können durch eine Kombination aus einem Dosierventil und einer Strahlpumpe erzielt werden. Für eine optimale Funktionsweise der beteiligten Komponenten ist eine präzise geometrische Ausrichtung zueinander notwendig.

US 2017/0244119 A1 bezieht sich auf einen Brennstoffzellengaszirkulationsmechanismus zur Umwälzung von Brennstoffzellengas aus einem Brennstoffzellenstapel in einem Brennstoffzellensystem. Innerhalb eines Körpers ist ein Fluidkanal für verbrauchtes Brennstoffzellengas vorgesehen; innerhalb des Fluidkanals befindet sich ein Diffusor, in dem ein Diffusorkanal ausgeführt ist. Stromauf des Diffusors befindet sich ein Injektor, der zum Einspritzen des Gases teilweise in den Körper eingeführt ist. Der Diffusorkanal umfasst einen Verbindungsteil, der mit einem Zirkulationskanal verbunden ist, sodass eine Zirkulation des Gases gewährleistet ist. Ein Abschnitt mit einem geringeren Durchmesser weist einen sich stetig ändernden Durchmesser vom Verbindungsteil zu einer stromabgelegenen Seite auf.

DE 102 59 808 A1 bezieht sich auf eine Regelstrahlpumpe. Diese umfasst einen Körper, in dem eine Düse aufgenommen ist, über die ein eingespritztes Fluid eingeführt wird, wobei der Körper weiterhin eine Ansaugöffnung aufweist. Diese weist stromaufwärts vom Ausgang eine Hilfskammer, die zwei Dichtelemente aufweist, auf. Jedes Dichtelement reißt, wenn eine bestimmte Druckhöhe durch das eingespritzte Fluid überschritten wird, wobei das erste Dichtelement bei einer ersten Druckhöhe aufreißt, während das zweite Dichtelement bei einer zweiten Druckhöhe aufreißt, die größer ist als die erste Druckhöhe oder gleich der ersten Druckhöhe.

DE 10 2010 043 618 A1 hat ein Proportionalventil zum Steuern und Ansaugen von gasförmigem Medium zum Gegenstand.

### Vorteile der Erfindung

Die Erfindung wird durch die anhängenden Ansprüche definiert.

Die erfindungsgemäße Strahlpumpeneinheit mit einem Dosierventil zum Steuern eines gasförmigen Mediums, insbesondere Wasserstoff, weist den Vorteil auf, dass durch eine optimierte Integration des Dosierventils in die Strahlpumpeneinheit eine präzise Zentrierung des Dosierventils in der Strahlpumpeneinheit und dadurch eine verbesserte Funktionsweise erzielt wird.

Dazu umfasst die Strahlpumpeneinheit ein Pumpengehäuse, ein Dosierventil mit einem Ventilgehäuse, einen Mischrohrbereich, einen Ansaugkanal und einen Ablaufbereich. In dem Pumpengehäuse ist eine Durchgangsbohrung, die eine Durchgangsöffnung ausbildet, ausgebildet. Darüber hinaus ist das Dosierventil in der Durchgangsöffnung aufgenommen, wobei in der Durchgangsöffnung radial zu einer Längsachse der Strahlpumpeneinheit eine erste Stufe und eine zweite Stufe zur radialen Zentrierung und Führung des Dosierventils in dem Pumpengehäuse ausgebildet sind.

Durch die Ausbildung einer ersten Stufe und einer zweiten Stufe in der Durchgangsbohrung wird eine Verbesserung der Koaxialität zwischen dem Dosierventil und dem Pumpengehäuse der Strahlpumpeneinheit erzielt. So kann eine bessere Vermischung zwischen dem rezirkulierten gasförmigen Medium und dem gasförmigen Medium aus dem Dosierventil erfolgen.

In einer ersten vorteilhaften Weiterbildung ist es vorgesehen, dass das Dosierventil eine Düse mit einem Durchlasskanal umfasst, wobei die Düse mittels der ersten Stufe und der zweiten Stufe koaxial in der Strahlpumpeneinheit vor dem Mischrohrbereich angeordnet ist. Dadurch werden Winkelfehler des Dosierventils innerhalb des Pumpengehäuses minimiert.

Nach der Erfindung ist es vorgesehen, dass in dem Dosierventil ein Zulaufkanal ausgebildet ist, welcher Zulaufkanal radial zu der Längsachse der Strahlpumpeneinheit zumindest teilweise in dem Pumpengehäuse ausgebildet ist und in die Durchgangsöffnung mündet. In einer weiteren Ausgestaltung ist das Ventilgehäuse mit einer Stufe an dem Pumpengehäuse angeordnet und mit diesem fest verbunden, vorzugsweise mittels eines Schraubenelements. So ist eine optimale Integration des Dosierventils in einfach konstruktiver Weise in das Pumpengehäuse gegeben.

In vorteilhafter Weiterbildung sind die erste Stufe axial oberhalb des Zulaufkanals in Richtung des Schraubenelements und die zweite Stufe axial unterhalb des Zulaufkanals in Richtung des Ansaugbereichs angeordnet. So werden geringe Winkeltoleranzen des Dosierventils in dem Pumpengehäuse erzielt.

In weiterer Ausgestaltung der Erfindung ist es vorteilhaft vorgesehen, dass die Durchgangsbohrung zumindest abschnittsweise konisch ausgebildet ist, wobei ein Ablaufkanal der Strahlpumpeneinheit radial zu der Längsachse der Strahlpumpeneinheit in dem Pumpengehäuse im konischen Bereich der Durchgangsbohrung ausgebildet ist. Vorteilhafterweise mündet der Zulaufkanal in einen Zuströmbereich innerhalb des Dosierventils, wobei der Zuströmbereich in der Durchgangsöffnung der Strahlpumpeneinheit ausgebildet ist. Durch die Integration des Dosierventils in das Pumpengehäuse der Strahlpumpeneinheit ist es möglich, die Strömung des gasförmigen Mediums direkt in die Strahlpumpeneinheit zu führen. Dadurch kann eine optimierte Auslegung von Dosierventil und Strahlpumpeneinheit erzielt werden.

Die beschriebene Strahlpumpeneinheit eignet sich vorzugsweise in einer Brennstoffzellenanordnung zum Steuern einer Wasserstoffzufuhr zu einem Anodenbereich einer Brennstoffzelle. Vorteile sind die geringen Druckschwankungen im Anodenpfad und ein leiser Betrieb.

### Zeichnungen

In der Zeichnung sind Ausführungsbeispiele einer erfindungsgemäßen Strahlpumpeneinheit und eines Dosierventils zur Steuerung einer Gaszufuhr, insbesondere Wasserstoff, zu einer Brennstoffzelle, dargestellt. Es zeigt in
- Fig. 1: ein Ausführungsbeispiel eines Dosierventils mit einer Düse im Längsschnitt,
- Fig. 2: ein Ausführungsbeispiel einer erfindungsgemäßen Strahlpumpeneinheit mit dem in Fig. 1 gezeigten Dosierventil im Längsschnitt,
- Fig. 3: ein vergrößerter Ausschnitt der Strahlpumpeneinheit aus der Fig. 2 im Bereich der Durchgangsöffnung, wobei nur die rechte Seite gezeigt ist.

Bauteile mit gleicher Funktion wurden mit derselben Bezugsziffer bezeichnet.

### Beschreibung des Ausführungsbeispiels

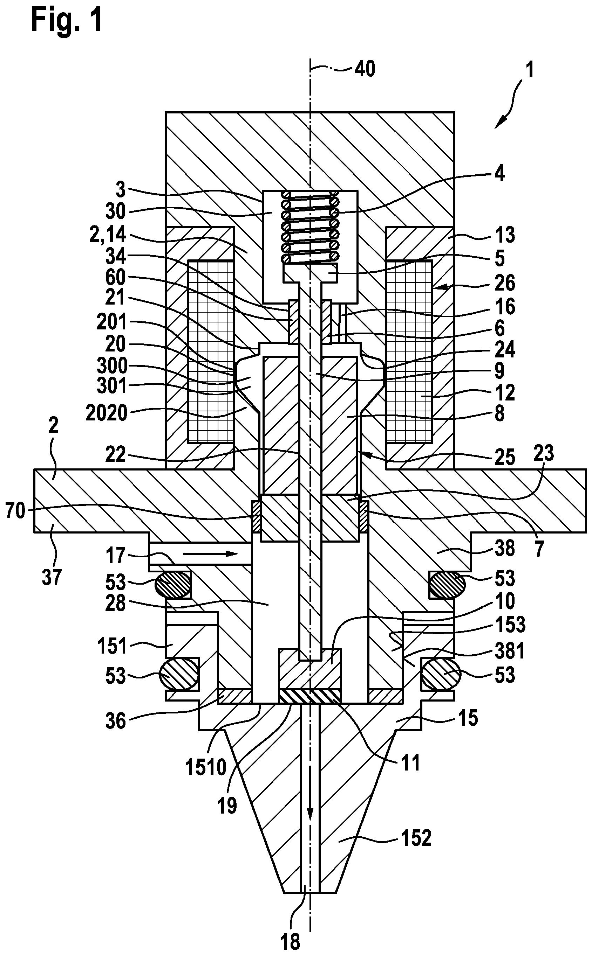

**Fig.1** zeigt ein Dosierventil 1, wie es in einer erfindungsgemäßen Strahlpumpeneinheit 46 eingesetzt wird, im Längsschnitt. Das Dosierventil 1 weist ein Ventilgehäuse 2 mit einem Innenraum 3 auf. In dem Innenraum 3 ist ein Elektromagnet 26 angeordnet, welcher eine Magnetspule 12, einen Innenpol 14 und einen Außenpol 13 umfasst.

Weiterhin ist in dem Innenraum 3 eine hubbewegliche Magnetankervorrichtung 25 angeordnet. Die Magnetankervorrichtung 25 umfasst einen Magnetanker 8 und ein Verbindungselement 9, welches in einer Ausnehmung 22 des Magnetankers 8 aufgenommen und somit fest mit dem Magnetanker 8 verbunden ist, beispielsweise durch eine Schweißnaht oder durch Verpressung. Der Magnetanker 8 ist als Tauchanker ausgebildet und in dem Innenpol 14 aufgenommen. Der Innenpol 14 weist eine Ausnehmung 21 mit einer Ausnehmungskante 24 auf, in der der Magnetanker 8 bei seiner Hubbewegung eintaucht.

An dem Innenpol 14 sind in einer Ausnehmung 34 erste Lagerbuchsen 60 angeordnet, in welchen das Verbindungselement 9 an einem ersten Führungsabschnitt 6 des Innenpols 14 aufgenommen und geführt ist. Weiterhin sind an dem Ventilgehäuse 2 zweite Lagerbuchsen 70 angeordnet, in welchen ein kolbenförmiger Abschnitt 23 des Verbindungselements 9 in einem zweiten Führungsabschnitt 7 aufgenommen und geführt ist. Der kolbenförmige Abschnitt 23 des Verbindungselements 9 ist dabei aus einem Material mit hoher mechanischer Festigkeit hergestellt.

Weiterhin umfasst das Dosierventil 1 eine Düse 15, welche einen topfförmigen Bereich 151 mit einem Topfgrund 1510 und einen Zapfen 152 aufweist. Das Ventilgehäuse 2 ist mit einem dem Elektromagneten 26 abgewandten zapfenförmigen Ende 38 in dem topfförmigen Bereich 151 der Düse 15 aufgenommen, wobei das Ventilgehäuse 2 mit einer Fläche 381 an einer Gegenfläche 153 der Düse 15 anliegt. Zwischen dem zapfenförmigen Ende 38 des Ventilgehäuses 2 und der Düse 15 ist ein Einstellelement 36 angeordnet.

Dies ist eine mögliche Ausführungsform der Düse 15. Alternativ kann die Düse 15 auch in dem Ventilgehäuse 2 des Dosierventils 1 aufgenommen und mit diesem fest verbunden sein.

Das Verbindungselement 9 ist an einem Ende mit einem Schließelement 10 fest verbunden. Das Schließelement 10 weist an seinem dem Verbindungselement 9 abgewandten Ende ein elastisches Dichtelement 11 auf. Das elastische Dichtelement 11 wirkt mit einem an dem Topfgrund 1510 der Düse 15 ausgebildeten Ventilsitz 19 zusammen, so dass beim Aufliegen des elastischen Dichtelements 11 auf dem Ventilsitz 19 ein in der Düse 15 ausgebildeter Durchlasskanal 18 geschlossen ist. Der Ventilsitz 19 ist hier als Flachsitz ausgebildet.

In dem Innenpol 14 ist ein Federraum 30 ausgebildet, welcher einen Teil des Innenraums 3 bildet. In dem Federraum 30 ist eine Schließfeder 4 angeordnet, welche sich zwischen dem Innenpol 14 und einem tellerförmigen Ende 5 des Verbindungselements 9 abstützt. Die Schließfeder 4 beaufschlagt die Magnetankervorrichtung 25 mit einer Kraft in Richtung des Ventilsitzes 19.

Weiterhin umfasst der Innenraum 3 einen Magnetankerraum 300, in dem der Magnetanker 8 angeordnet ist. Der Magnetankerraum 300 ist über einen Verbindungskanal 16 mit dem Federraum 30 verbunden. An seinem dem Schließelement 10 zugewandten Ende grenzt der Magnetanker 8 an einen Zuströmbereich 28 an, welcher über einen bezüglich einer Längsachse 40 des Dosierventils 1 der Strahlpumpeneinheit 46 radial angeordneten und in dem Ventilgehäuse 2 ausgebildeten Zulaufkanal 17 mit gasförmigem Medium, beispielsweise Wasserstoff, befüllbar ist.

Das Ventilgehäuse 2 und der Innenpol 14 sind über eine magnetische Drosselstelle 20 magnetisch und mechanisch miteinander verbunden. Vorteilhafterweise können sie einteilig ausgebildet sein. Die magnetische Drosselstelle 20 umfasst einen dünnwandigen zylindrischen Steg 201 und einen konusförmigen Bereich 2020, wodurch in dem Magnetankerraum 300 eine Ringnut 301 ausgebildet ist.

Die einteilige Form von Ventilgehäuse 2 und Innenpol 14 zeigt lediglich eine mögliche Ausführungsform auf und kann jedoch genauso wie die Drosselstelle 20 entfallen.

Die Funktionsweise des Dosierventils 1 ist wie folgt:
Bei nicht bestromter Magnetspule 12 wird das Schließelement 10 über die Schließfeder 4 an den Ventilsitz 19 gedrückt, so dass die Verbindung zwischen dem Zuströmbereich 28 und dem Durchlasskanal 18 unterbrochen ist und kein Gasdurchfluss erfolgt.

Wird die Magnetspule 12 bestromt, so wird eine magnetische Kraft auf den Magnetanker 8 erzeugt, welcher der Schließkraft der Schließfeder 4 entgegengerichtet ist. Diese magnetische Kraft wird über das Verbindungselement 9 auf das Schließelement 10 übertragen, so dass die Schließkraft der Schließfeder 4 überkompensiert wird und das Schließelement 10 mit dem elastischen Dichtelement 11 vom Ventilsitz 19 abhebt. Ein Gasdurchfluss durch das Dosierventil 1 ist freigegeben.

Der Hub des Schließelements 10 kann über die Höhe der Stromstärke an der Magnetspule 12 eingestellt werden. Je höher die Stromstärke an der Magnetspule 12, desto größer ist der Hub des Schließelements 10 und desto höher ist auch der Gasdurchfluss im Dosierventil 1, da die Kraft der Schließfeder 4 hubabhängig ist. Wird die Stromstärke an der Magnetspule 12 reduziert, wird auch der Hub des Schließelements 10 reduziert und somit der Gasdurchfluss gedrosselt.

Wird der Strom an der Magnetspule 12 unterbrochen, wird die magnetische Kraft auf den Magnetanker 8 abgebaut, so dass die Kraft auf das Schließelement 10 mittels des Verbindungselements 9 reduziert wird. Das Schließelement 10 bewegt sich in Richtung des Durchlasskanals 18 und dichtet mit dem elastischen Dichtelement 11 an dem Ventilsitz 19 ab. Der Gasdurchfluss im Dosierventil 1 ist unterbrochen.

Das Dosierventil 1 der erfindungsgemäßen Strahlpumpeneinheit 46 kann beispielsweise in einer Brennstoffzellenanordnung Verwendung finden. Mittels des Dosierventils 1 kann einem Anodenbereich der Brennstoffzelle Wasserstoff aus einem Tank zugeführt werden. Je nach Höhe der Stromstärke an der Magnetspule 12 des Dosierventils 1, durch welche der Hub des Schließelements 10 betätigt wird, wird damit ein Strömungsquerschnitt an dem Durchlasskanal 18 derart verändert, dass kontinuierlich eine bedarfsgerechte Einstellung der der Brennstoffzelle zugeführten Gasströmung erfolgt.

Das Dosierventil 1 zum Steuern eines gasförmigen Mediums weist somit den Vorteil auf, dass hierbei die Zuführung des ersten gasförmigen Mediums und die Zudosierung von Wasserstoff in den Anodenbereich der Brennstoffzelle mittels elektronisch gesteuerten Anpassung des Strömungsquerschnitts des Durchlasskanals 18 bei gleichzeitiger Regelung des Anodendrucks wesentlich exakter erfolgen kann. Hierdurch werden die Betriebssicherheit und Dauerhaltbarkeit der angeschlossenen Brennstoffzelle deutlich verbessert, da Wasserstoff immer in einem überstöchiometrischen Anteil zugeführt wird. Zudem können auch Folgeschäden, wie zum Beispiel Beschädigungen eines nachgeordneten Katalysators, verhindert werden.

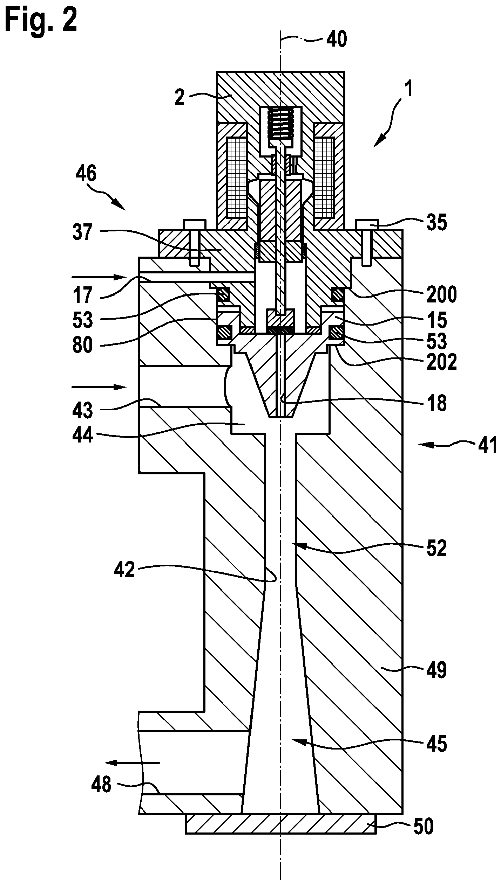

**Fig.2** zeigt ein Ausführungsbeispiel einer erfindungsgemäßen Strahlpumpeneinheit 46 mit dem Dosierventil 1 im Längsschnitt. Die Strahlpumpeneinheit 46 weist ein Strahlpumpengehäuse 41 auf, das das Ventilgehäuse 2 des Dosierventils 1 und ein Pumpengehäuse 49 umfasst. Die Strahlpumpeneinheit 46 weist die Längsachse 40 auf, welche identisch mit der Längsachse des Dosierventils 1 ist.

In dem Pumpengehäuse 49 sind axial zu der Längsachse 40 eine teilweise stufenförmig und teilweise konisch ausgebildete Durchgangsbohrung 42 und radial zu der Längsachse 40 ein Ansaugkanal 43 und der Zulaufkanal 17 des Dosierventils 1 ausgebildet. In der Durchgangsbohrung 42 sind ein Ansaugbereich 44, ein Mischrohrbereich 52 und ein Ablaufbereich 45 ausgebildet. Das Dosierventil 1 ist in einer Durchgangsöffnung 80 der Durchgangsbohrung 42 koaxial in dem Pumpengehäuse 49 abschnittsweise aufgenommen. Dabei ist das Ventilgehäuse 2 mit einer Stufe 37 an dem Pumpengehäuse 49 angeordnet und ist mit diesem über mehrere Schraubenelemente 35 fest verbunden. Weiterhin sind an dem Ventilgehäuse 2 und an der Düse 15 Dichtungselemente 53 angeordnet, so dass das Ventilgehäuse 2 und das Pumpengehäuse 49 gegeneinander abgedichtet sind. Gasförmiges Medium aus dem Zulaufkanal 17 gelangt so nur über den Durchlasskanal 18 in Richtung des Ansaugbereichs 44.

An dem dem Dosierventil 1 abgewandten Endbereich des Pumpengehäuses 49 ist radial zu der Längsachse 40 in dem Pumpengehäuse 49 ein Ablaufkanal 48 ausgebildet, wobei die Durchgangsbohrung 42 an dem dem Dosierventil 1 abgewandten Endbereich des Pumpengehäuses 49 mit einem Deckel 50 abgedichtet ist.

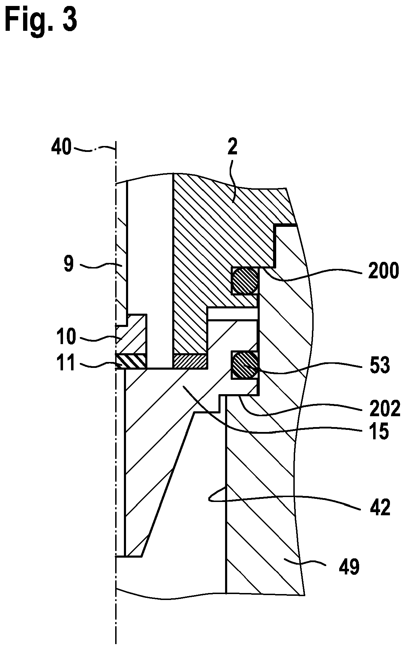

Weiterhin sind, wie in **Fig.3** in vergrößerter Darstellung gezeigt, in dem Pumpengehäuse 49 in der Durchgangsöffnung 80 des Pumpengehäuses 49, in dem das Dosierventil 1 mit dem Ventilgehäuse 2 in dem Pumpengehäuse 49 aufgenommen ist, radial zu der Längsachse 40 eine erste Stufe 200 und eine zweite Stufe 202 ausgebildet. So kann das Ventilgehäuse 2 des Dosierventils 1 in dem Pumpengehäuse 49 radial geführt und entsprechend in der Durchgangsbohrung 42 ausgerichtet werden, damit eine präzise und winkelgenaue Ausrichtung der Düse 15 des Dosierventils 15 zu dem Mischrohrbereich 52 sichergestellt werden kann. Dabei ist die erste Stufe 200 radial oberhalb des Zulaufkanals 17 in Richtung des Elektromagneten 26 und die zweite Stufe 202 unterhalb des Zulaufkanals 17 in Richtung des Ansaugbereichs 44 angeordnet. Zwischen dem Dosierventil 1 und der ersten Stufe 200 und zwischen dem Dosierventil 1 und der zweiten Stufe 202 ist jeweils ein Abstand ausgebildet, so dass das Dosierventil 1 nicht auf der ersten Stufe 200 und/oder auf der zweiten Stufe 202 aufliegt.

### Funktionsweise der Strahlpumpeneinheit 46

Bei geöffnetem oder teilgeöffnetem Ventilsitz 19 des Dosierventils 1 strömt über den Ventilsitz 19 aus dem Zufuhrkanal 17 des Dosierventils 1 gasförmiges Medium, hier Wasserstoff, aus dem Tank in den Durchlasskanal 18 in der Düse 15. Dieser Wasserstoff trifft nach Austritt aus der Düse 15 und Eintritt in die Durchgangsbohrung 42 in dem Ansaugbereich 44 auf gasförmiges Medium, welches der Brennstoffzelle bereits zugeführt, jedoch nicht verbraucht wurde, und über den Ansaugkanal 43 zurück in die Strahlpumpeneinheit 46 geführt wurde. Das zurückgeführte gasförmige Medium umfasst hauptsächlich Wasserstoff, aber auch Wasserdampf und Stickstoff. In dem Mischrohrbereich 52 wird durch Impulsaustausch der gasförmigen Medien ein Massenstrom aus dem Ansaugbereich 44 angesaugt und in Richtung Ablaufbereich 45 und somit in Richtung dem Anodenbereich der Brennstoffzelle gefördert. Je nach Geometrie der Durchgangsbohrung 42 und dem Einsetzwinkel des Dosierventils 1 und damit der Düse 15 kann eine bedarfsgerechte Einstellung der der Brennstoffzelle zugeführten Gasströmung erfolgen.

## Patentansprüche

1. Strahlpumpeneinheit (46), umfassend ein Pumpengehäuse (49), ein Dosierventil (1) mit einem Ventilgehäuse (2), ein Mischrohrbereich (52), ein Ansaugkanal (43) und ein Ablaufbereich (45), wobei in dem Pumpengehäuse (49) eine Durchgangsbohrung (42), die eine Durchgangsöffnung (80) ausbildet, ausgebildet ist, wobei das Dosierventil (1) in der Durchgangsöffnung (80) aufgenommen ist und in der Durchgangsöffnung (80) radial zu einer Längsachse (40) der Strahlpumpeneinheit (46) eine erste Stufe (200) und eine zweite Stufe (202) zur radialen Zentrierung und Führung des Dosierventils (1) in dem Pumpengehäuse (49) ausgebildet sind und in dem Dosierventil (1) ein Zulaufkanal (17) ausgebildet ist, **dadurch gekennzeichnet, dass** der Zulaufkanal (17) radial zu der Längsachse (40) der Strahlpumpeneinheit (46) zumindest auch teilweise in dem Pumpengehäuse (49) ausgebildet ist und in die Durchgangsöffnung (80) mündet.

2. Strahlpumpeneinheit (46) nach Anspruch 1, **dadurch gekennzeichnet, dass** das Dosierventil (1) eine Düse (15) mit einem Durchlasskanal (18) umfasst, wobei die Düse (15) mittels der ersten Stufe (200) und der zweiten Stufe (202) koaxial in der Strahlpumpeneinheit (46) vor dem Mischrohrbereich (52) angeordnet ist.

3. Strahlpumpeneinheit (46) nach Anspruch 1 oder 2, **dadurch gekennzeichnet, dass** das Ventilgehäuse (2) mit einer Stufe (37) an dem Pumpengehäuse (49) angeordnet und mit diesem fest verbunden ist, vorzugsweise mittels Schraubenelemente (35).

4. Strahlpumpeneinheit (46) nach Anspruch 3, **dadurch gekennzeichnet, dass** die erste Stufe (200) axial oberhalb des Zulaufkanals (17) in Richtung der Schraubenelemente (35) und die zweite Stufe (202) axial unterhalb des Zulaufkanals (17) in Richtung des Ansaugbereichs (44) angeordnet sind.

5. Strahlpumpeneinheit (46) nach einem der vorhergehenden Ansprüche, **dadurch gekennzeichnet, dass** die Durchgangsbohrung (42) zumindest abschnittsweise konisch ausgebildet ist, wobei ein Ablaufkanal (48) der Strahlpumpeneinheit (46) radial zu der Längsachse (40) der Strahlpumpeneinheit (46) in dem Pumpengehäuse (49) im konischen Bereich der Durchgangsbohrung (42) ausgebildet ist.

6. Strahlpumpeneinheit (46) nach Anspruch 3 oder 4, **dadurch gekennzeichnet, dass** der Zulaufkanal (17) in einen Zuströmbereich (28) innerhalb des Dosierventils (1) mündet, wobei der Zuströmbereich (28) in der Durchgangsöffnung (80) der Strahlpumpeneinheit (46) ausgebildet ist.

7. Brennstoffzellenanordnung mit einer Strahlpumpeneinheit (46) zum Steuern einer Wasserstoffzufuhr zu einer Brennstoffzelle nach einem der vorhergehenden Ansprüche.

## Claims

1. Jet pump unit (46) comprising a pump housing (49), a metering valve (1) with a valve housing (2), a mixer tube region (52), an intake channel (43) and an outlet region (45), wherein a passage bore (42) constituting a passage opening (80) is formed in the pump housing (49), wherein the metering valve (1) is received in the passage opening (80) and a first step (200) and a second step (202) are formed in the passage opening (80), radially with respect to a longitudinal axis (40) of the jet pump unit (46), for radially centring and guiding the metering valve (1) in the pump housing (49), and a supply channel (17) is formed in the metering valve (1), **characterized in that** the supply channel (17) is also formed at least partially in the pump housing (49), radially with respect to the longitudinal axis (40) of the jet pump unit (46), and opens into the passage opening (80).

2. Jet pump unit (46) according to Claim 1, **characterized in that** the metering valve (1) comprises a nozzle (15) with a passage channel (18), wherein the nozzle (15) is arranged coaxially in the jet pump unit (46), in front of the mixer tube region (52), by means of the first step (200) and the second step (202).

3. Jet pump unit (46) according to Claim 1 or 2, **characterized in that** the valve housing (2) is arranged by a step (37) on the pump housing (49) and is fixedly connected thereto, preferably by means of screw elements (35).

4. Jet pump unit (46) according to Claim 3, **characterized in that** the first step (200) is arranged axially above the supply channel (17) in the direction of the screw elements (35), and the second step (202) is arranged axially below the supply channel (17) in the direction of the intake region (44).

5. Jet pump unit (46) according to any of the preceding claims, **characterized in that** the passage bore (42) is of conical form at least in certain portions, wherein an outlet channel (48) of the jet pump unit (46) is formed in the pump housing (49), radially with respect to the longitudinal axis (40) of the jet pump unit (46), in the conical region of the passage bore (42).

6. Jet pump unit (46) according to Claim 3 or 4, **characterized in that** the supply channel (17) opens into an inflow region (28) inside the metering valve (1), wherein the inflow region (28) is formed in the passage opening (80) of the jet pump unit (46).

7. Fuel cell arrangement with a jet pump unit (46) for controlling a hydrogen supply to a fuel cell, according to any of the preceding claims.

## Revendications

1. Unité de pompe à jet (46), comprenant un boîtier de pompe (49), une soupape de dosage (1) pourvue d'un boîtier de soupape (2), une zone de tube de mélange (52), un canal d'aspiration (43) et une zone d'évacuation (45), un trou traversant (42), qui forme une ouverture de passage (80), étant formé dans le boîtier de pompe (49), la soupape de dosage (1) étant reçue dans l'ouverture de passage (80), et un premier gradin (200) et un deuxième gradin (202) pour le centrage radial et le guidage de la soupape de dosage (1) dans le boîtier de pompe (49) étant formés dans l'ouverture de passage (80) radialement par rapport à un axe longitudinal (40) de l'unité de pompe à jet (46), et un canal d'alimentation (17) étant formé dans la soupape de dosage (1), **caractérisée en ce que** le canal d'alimentation (17) est formé au moins également partiellement dans le boîtier de pompe (49) radialement par rapport à l'axe longitudinal (40) de l'unité de pompe à jet (46), et débouche dans l'ouverture de passage (80).

2. Unité de pompe à jet (46) selon la revendication 1, **caractérisée en ce que** la soupape de dosage (1) comprend une buse (15) pourvue d'un canal de passage (18), la buse (15) étant agencée au moyen du premier gradin (200) et du deuxième gradin (202) coaxialement dans l'unité de pompe à jet (46) avant la zone de tube de mélange (52).

3. Unité de pompe à jet (46) selon la revendication 1 ou 2, **caractérisée en ce que** le boîtier de soupape (2) est agencé avec un gradin (37) sur le boîtier de pompe (49) et relié de manière fixe à celui-ci, de préférence au moyen d'éléments de vissage (35).

4. Unité de pompe à jet (46) selon la revendication 3, **caractérisée en ce que** le premier gradin (200) est agencé axialement au-dessus du canal d'alimentation (17) en direction des éléments de vissage (35) et le deuxième gradin (202) est agencé axialement en dessous du canal d'alimentation (17) en direction de la zone d'aspiration (44).

5. Unité de pompe à jet (46) selon l'une quelconque des revendications précédentes, **caractérisée en ce que** le trou traversant (42) est configuré sous forme conique au moins en sections, un canal d'évacuation (48) de l'unité de pompe à jet (46) étant formé dans le boîtier de pompe (49) dans la zone conique du trou traversant (42) radialement par rapport à l'axe longitudinal (40) de l'unité de pompe à jet (46).

6. Unité de pompe à jet (46) selon la revendication 3 ou 4, **caractérisée en ce que** le canal d'alimentation (17) débouche dans une zone de flux entrant (28) à l'intérieur de la soupape de dosage (1), la zone de flux entrant (28) étant formée dans l'ouverture de passage (80) de l'unité de pompe à jet (46).

7. Agencement de pile à combustible pourvu d'une unité de pompe à jet (46) pour la régulation d'une alimentation en hydrogène d'une pile à combustible selon l'une quelconque des revendications précédentes.
